# EUROPEAN PATENT APPLICATION

(11) **EP 4 434 353 A1**
(43) Date of publication of application: **25.09.2024**
(21) Application number: 23162755.5
(22) Date of filing: 18.03.2023
(51) Int. Cl.: A23L 5/43, A23L 5/44

(54) **NATURAL RED COLORING COMPOSITIONS FOR MEAT OR FISH REPLACEMENT PRODUCTS**

(71) Applicant: Oterra A/S, 2970 Hørsholm (DK)
(72) Inventor: Bahu, Cécile, 2970 Hørsholm (DK); Fernandez Lara, Rebeca, 2970 Hørsholm (DK); Kraszewski, AnnMarie, 2970 Hørsholm (DK); Rasmussen, Karsten, 2970 Hørsholm (DK)
(74) Representative: Willnegger, Eva

(57) **Abstract**

The use of a natural red coloring composition comprising
▪ red beet and/or red sweet potato; and
▪ one or more further pigments selected from the group consisting of paprika, beta-carotene, and black carrot;
for coloring meat or fish replacement products, in particular plant-based burgers, steaks, or patties.

## Description

### FIELD OF THE INVENTION

The invention relates to the field of natural red coloring compositions for food applications, in particular for plant-based meat or replacement products such as vegan meat analogues. Consumers are more and more interested in entirely natural colouring compositions for food applications.

Anthocyanins and betalains are widely distributed in red fruits and vegetables. Therefore, anthocyanins can be used as alternatives to artificial colorants through their brilliant red color.

Adding natural colors to meat and processed meat to achieve a red color in raw meat and brown color in cooked meat is for example described in WO2022090092 to Givaudan. This document discloses the use of an anthocyanin and/or betanin as a colourant in a meat or fish replacement product such as selected from meat, fish, or meat analogue. However, there is no working example or embodiment relating to the use of a natural coloring composition comprising two or more pigments for coloring meat or fish replacement products.

US2021259290A1 to Beyond Meat discloses a food matrix amongst others an aqueous solution with 0.2 - 5% by weight of one or more solutes selected from the group consisting of a set of coloring agents, ascorbic acid, and pH adjusting agents. The coloring agent is selected from the group consisting of natural colorants, natural extracts, beet root extract, pomegranate fruit extract, cherry extract, carrot extract, red cabbage extract, red seaweed extract, natural juices, beet root juice, pomegranate fruit juice, cherry juice, carrot juice, red cabbage juice, red seaweed juice, annatto, anthocyanins, betanins, beta-carotene, curcumin, lutein, carotenoids, paprika, riboflavin, saffron, and turmeric. However, there is no working example or embodiment relating to the use of a natural coloring composition comprising two or more pigments for coloring meat or fish replacement products.

WO2022253643A1 to Nestle discloses a meat analogue comprising a colorant derived from beet, carrot, radish, annatto, potato, sweet potato, tomato, pepper, caramel, safflower, red cabbage, molasses, malt, apple, hibiscus, black or red currant, blueberry, green tea, black tea, coffee, grapeseed, elderberry, cranberry, pomegranate, blackberry, black or red raspberry, strawberry, algae, mushroom, fungi, turmeric, paprika, rose, marigold or combinations thereof. However, there is no working example or embodiment relating to the use of a natural coloring composition comprising two or more pigments for coloring meat or fish replacement products.

The need for red colors for these applications has grown with the growing trend towards vegan diets. Plant-based food companies primarily added beet to plant-based meat to improve the shade of patties. However, the result often does not compare to the shade of real meat. Therefore, there still is a need for stable and heat-resistant natural red colouring compositions for these food applications.

### SHORT DESCRIPTION OF THE INVENTION

The inventors have surprisingly found that the use of red beet and at least one further pigment selected from the group consisting of paprika, red sweet potato, beta-carotene, and black carrot drastically improved the redness of the plant-based meat or fish replacement products.

The colorimetric analysis shows that the developed blends give a redder shade than the existing commercial coloring compositions for meat or replacement products. The inventors further found that the addition of red sweet potato provides excellent coloring performance in plant-based burgers, steaks and patties.

Accordingly, a first aspect of the present invention is the use of a natural red coloring composition comprising:
▪ red beet and/or red sweet potato; and
▪ one or more further pigments selected from the group consisting of paprika, beta-carotene, and black carrot;
for coloring meat or fish replacement products, in particular plant-based burgers, steaks, patties or emulsified meat.

In another aspect of the invention, the natural red coloring composition is in the form of a powder.

In another aspect, the natural red coloring composition comprises two pigments, in particular beta-carotene and red sweet potato.

In another aspect, the natural red coloring composition comprises three pigments, in particular
▪ Red beet, paprika and red sweet potato;
▪ Beta-carotene, black-carrot juice, and red sweet potato; or
▪ Red beet, paprika, and red sweet potato.

In another aspect, the weight ratio between the red beet and/or the red sweet potato and the one or more further pigments is from 5:1 to 50:1, preferably from 7.5:1 to 30:1, even more preferably from 10:1 to 15:1.

In another aspect, the composition comprises no further pigment.

In another aspect, the composition does not comprise one or more pigments selected from the group consisting of apple, caramel, acerola, malt and Carthamus.

In another aspect, the composition is not a composition comprising red beet, malt and Carthamus.

In another aspect, the pH of the meat or fish replacement product is between 4 and 6, preferably between 5 and 6.

In another aspect, the natural red coloring composition is present in amount from 0.1 w% to 15 w%, preferably from 1 w% to 10 w%, even more preferably from 2.5 w% to 7.5 w% as compared to the total weight of the meat or fish replacement product.

In another aspect, the meat or fish replacement product comprises protein in amount from 10 w% and 50 w% as compared to the total weight of the meat or fish replacement product.

A further aspect is a method for coloring a meat or fish replacement products, in particular plant-based burgers, steaks, patties or emulsified meat, comprising:
▪ Mixing the natural red coloring composition of the invention with a meat or fish replacement matrix; and
▪ Forming the meat or fish replacement products, in particular plant-based burgers, steaks, patties or emulsified meat.

A further aspect is a meat or fish replacement products, in particular plant-based burgers, steaks, patties or emulsified meat, comprising the natural red coloring composition of the invention.

### SHORT DESCRIPTION OF THE DRAWINGS

Figure 1 shows the coloring performance of exemplary natural red powder coloring compositions 1.1 to 1.4 of example 1 in meat-replacement products manufactured according to example 2 before and after heating.
Figure 1.1 shows the coloring performance before and after heating in plant-based burger of the natural red coloring composition comprising red beet, paprika and red sweet potato of example 1.1.
Figure 1.2 shows the coloring performance before and after heating in plant-based burger of a natural red coloring composition comprising beta-carotene, black carrot, red sweet potato of example 1.2.
Figure 1.3 shows the coloring performance before and after heating in emulsified meat comprising a natural red coloring composition comprising beta-carotene, paprika, red sweet potato of example 1.3.
Figure 1.4 shows the coloring performance before and after heating in plant-based emulsified meats comprising a natural red coloring composition comprising beta carotene and red sweet potato.

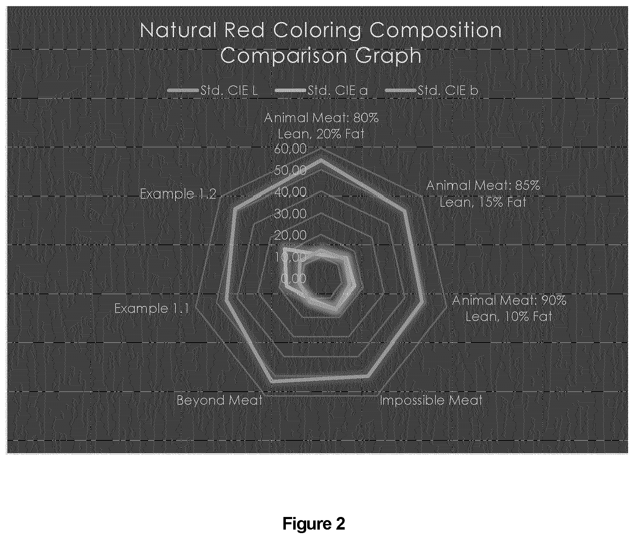

Figure 2 shows the coloring performance of 2 exemplary natural red powder coloring compositions Example 1.1. and 1.2 in meat-replacement products before and after heating.

### DETAILED DESCRIPTION OF THE INVENTION

The invention is now described in further detail without, however, limiting its scope.

### Red beet

Red beet describes any betalain-containing extract of *beta vulgaris,* preferably a powder extract.

In one embodiment, the red beet is present in an amount from 0.1 w% to 50 w%, preferably from 1 w% to 40 w%, even more preferably from 2.5 w% to 35 w% as compared to the total weight of the natural red coloring composition.

In another embodiment, the red beet is present in an amount from 15 w% to 40 w%, preferably from 20 w% to 35 w%, an even more preferably from 25 w% to 30%.

Usually, the concentrations of betalains in red beetroots are between 200 mg/Kg fresh weight and 2100 mg/Kg fresh weight.

### Red sweet potato

Red sweet potato describes any anthocyanin-containing extract of *ipomoea batatas.*

Usually, the anthocyanin content of the red sweet potato is between 61.5 mg/Kg fresh weight and 573.5 mg/kg fresh weight expressed as cyanidin

Preferably, the red sweet potato comprises based on the total amount of anthocyanins, 5-55 mol-% of an acylated pelargonidin derivative (1) of the following formula (shown in the protonized and thus positively charged form): 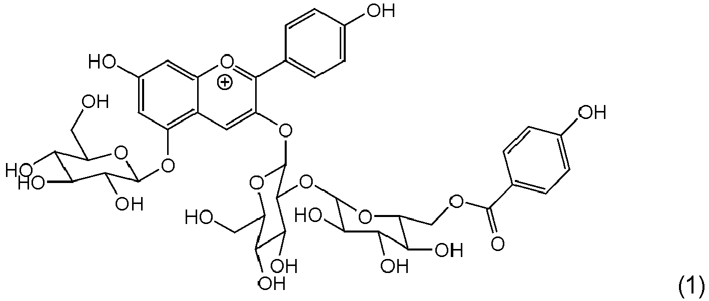 and based on the total amount of anthocyanins, 3-60 mol-% of an acylated pelargonidin derivative (2) of the following formula (shown in the protonized and thus positively charged form):

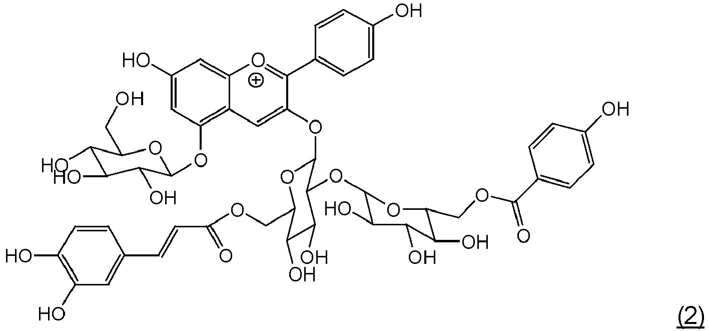

Preferably, the red sweet potato is the Hansen red sweet potato commercially available from Oterra A/S.

In one embodiment, the red sweet potato is present in an amount from 0.1 w% to 70 w%, preferably from 1 w% to 60 w%, even more preferably from 2.5 w% to 58 w% as compared to the total weight of the natural red coloring composition.

### Paprika

Paprika describes any capsanthin and capsorubin-containing extract from *capsicum annuum.*

Usually, the total carotenoids content in paprika is no less than 7 w% and capsanthin no less than 30 w% of total carotenoids. Paprika oleoresin is available in different colour strengths up to 150 000 colour units (equivalent to 10.8% total carotenoids)

The red paprika is usually present in an amount from 0.1 w% to 5.0 w%, preferably from 0.2 w% to 2.5 w% as compared to the total weight of the natural red coloring composition.

### Beta-carotene

Beta-carotene is prepared synthetically or obtained from natural sources for example by extraction of carrots *(Daucus carota),* and other edible plants with subsequent purification, or by a fermentation process of the fungus *Blackeslea trispora*

Usually, the pigment content from *Blackeslea trispora* is no less than 96.0 wt% and the pigment content of carrot is between 65 mg/Kg and 83 mg/Kg In one embodiment, the beta-carotene is present in an amount from from 0.01 w% to 5 w%, preferably from 0.01 w% to 2.5 w%, even more preferably from 0.05 w% to 0.5 w% as compared to the total weight of the natural red coloring composition. The beta-carotene may be natural beta-carotene or nature-identical beta-carotene.

### Black carrot

Black carrot describes any anthocyanin-containing extract from *Daucus carota.*

Usually, the anthocyanin content of the black carrot is between 45.4mg/Kg DW and 17.4g/Kg DW.

The black carrot is usually present in an amount from from 0.1 w% to 40 w%, preferably from 0.5 w% to 30 w%, even more preferably from 10 w% to 30 w%, and even more preferably from 15 w% to 25 w%, and even more preferably from 15 w% to 20 w% as compared to the total weight of the natural red coloring composition.

### Combination of red beet and/or red sweet potato and on or more further pigments

The natural coloring composition comprises
▪ red beet and/or red sweet potato; and
▪ one or more further pigments selected from the group consisting of paprika, beta-carotene, and black carrot.

Through this combination, a surprising meat-like coloring performance was obtained in meat-replacement products such as plant-based burgers, steaks, or patties.

The ratios of the pigments in the natural red coloring composition may vary.

In a one embodiment, the weight ratio between red beet and/or the red sweet potato and the one or more further pigments is from 5:1 to 50:1, preferably from 7.5:1 to 30:1, even more preferably from 10:1 to 15:1.

In a preferred embodiment, the natural red coloring composition is used for coloring a patty and the weight ratio between red beet and/or the red sweet potato and the one or more further pigments is from 5:1 to 50:1, preferably from 7.5:1 to 30:1, even more preferably from 10:1 to 15:1.

In another embodiment, the natural red coloring composition comprises two pigments, in particular beta-carotene and red sweet potato.

In another embodiment, use according to any one of the preceding claims, wherein the composition comprises three pigments, in particular:
▪ Red beet, paprika and red sweet potato;
▪ Beta-carotene, black-carrot juice, and red sweet potato; or
▪ Red beet, paprika, and red sweet potato.

In one embodiment, the natural red coloring composition does not contain any further pigment.

In one embodiment, the natural red coloring composition does not contain any pigments selected from the group consisting of apple, caramel, and acerola.

### Red beet, paprika and red sweet potato

In one embodiment, the natural red coloring composition comprises red beet, paprika and red sweet potato, preferably Hansen Sweet Potato in the following exemplary weight concentrations (w%):

| | **In the meat or fish replacement product (w%):** | | |
|---|---|---|---|
| Red beet | 0.01-2.5% | 0.03-1.25% | 0.13-0.63% |
| Paprika | 0.001-0.24% | 0.002-0.12% | 0.01-0.06% |
| Hansen Sweet Potato | 0.002-0.35% | 0.004-0.18% | 0.02-0.09% |

In this embodiment, the natural red coloring composition is present in the meat or fish replacement product in an amount from 0.05 w% to 10.0 w%, preferably from 0.1 w% to 5 w%, most preferably from 0.5 w% to 2.5 w% as compared to the total weight of the meat or fish replacement product.

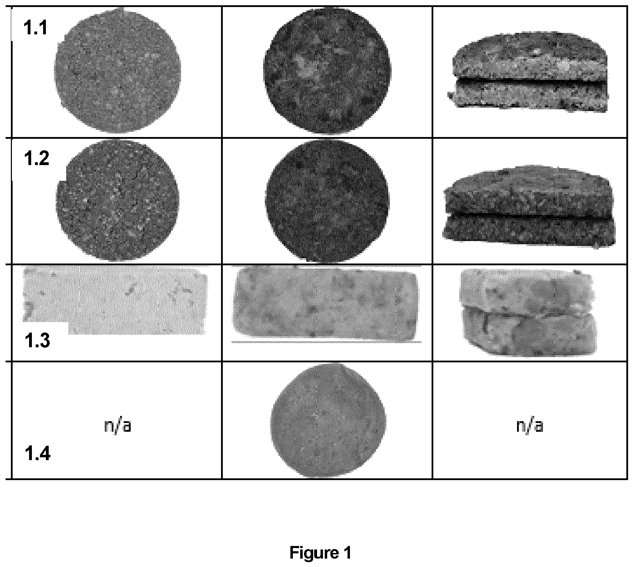

In one embodiment, the natural red coloring composition comprises red beet, paprika and red sweet potato. In this embodiment, the red sweet potato is preferably present in an amount from 1.0 w% to 10.0 w%, preferably from 2.0 w% to 7.0 w%, most preferably from 2,5 w% to 4.5 w% as compared to the total weight of the meat or fish replacement product, in particular a burger. An exemplary embodiment is shown in Example 1.1. - Figure 1.1.

### Beta-carotene, black carrot juice and red sweet potato

In one embodiment, the natural red coloring composition comprises beta-carotene, black carrot juice, and red sweet potato, preferably Hansen sweet potato in the following exemplary weight concentrations (w%):

| | **In the meat or fish replacement product (w%):** | | |
|---|---|---|---|
| B-carotene | 0.001-0.112% | 0.001-0.06% | 0.002-0.028% |
| Black Carrot Juice | 0.01-1.70% | 0.02-0.85% | 0.03-0.43% |
| Hansen Sweet Potato | 0.02-3.61 % | 0.04-1.81 % | 0.05-0.90% |

In this embodiment, the natural red coloring composition is present in the meat or fish replacement product in an amount from 0.05 w% to 10.0 w%, preferably from 0.1 w% to 5 w%, most preferably from 0.15 w% to 2.5 w% as compared to the total weight of the meat or fish replacement product.

In one embodiment, the natural red coloring composition comprises beta-carotene, black carrot juice, and red sweet potato. In this embodiment, the red sweet potato is preferably present in an amount from 10 w% to 60 w%, preferably from 20 w% to 50 w%, most preferably from 25 w% to 45 w% as compared to the total weight of the meat or fish replacement product, in particular a burger. An exemplary embodiment is shown in Example 1.2. - Figure 1.2.

### Red beet, paprika, red sweet potato

In one embodiment, the natural red coloring composition comprises red beet, paprika, red sweet potato, preferably Hansen sweet potato in the following exemplary weight concentrations (w%):

### In the meat or fish replacement product (w%):

| | | | |
|---|---|---|---|
| Red Beet | 0.01-2.70% | 0.03-1.35% | 0.04-0.68% |
| Paprika | 0.0001-0.023% | 0.0002-0.012% | 0.0003-0.006% |
| Hansen Sweet Potato | 0.01-1.5% | 0.02%-0.75% | 0.02-0.38% |

In this embodiment, the natural red coloring composition is present in the meat or fish replacement product in an amount from 0.05 w% to 10.0 w%, preferably from 0.1 w% to 5 w%, most preferably from 0.15 w% to 2.5 w% as compared to the total weight of the meat or fish replacement product.

In one embodiment, natural red coloring composition comprises red beet, paprika, and red sweet potato. In this embodiment, the red sweet potato is preferably present in an amount from 1 w% to 30 w%, preferably from 5 w% to 25 w%, most preferably from 10 w% to 20 w% as compared to the total weight of the meat or fish replacement product, in particular a fish replacement product, for example a tuna replacement product. An exemplary embodiment is shown in Example 1.3. - Figure 1.3.

### Beta-carotene and red sweet potato

In one embodiment, the natural red coloring composition comprises beta-carotene and red sweet potato, preferably Hansen sweet potato in the following exemplary weight concentrations (w%):

| | **In the meat or fish replacement product (w%):** | | |
|---|---|---|---|
| B-carotene | 0.00005-0.01% | 0.0001-0.005% | 0.0001-0.002% |
| Hansen Sweet Potato | 0.03-5.53% | 0.06-2.76% | 0.08-1.38% |

In this embodiment, the natural red coloring composition is present in the meat or fish replacement product in an amount from 0.05 w% to 10.0 w%, preferably from 0.1 w% to 5 w%, most preferably from 0.15 w% to 2.5 w% as compared to the total weight of the meat or fish replacement product.

In one embodiment, natural red coloring composition comprises beta-carotene and red sweet potato. In this embodiment, the red sweet potato is preferably present in an amount from 20 w% to 80.0 w%, preferably from 30.0 w% to 70.0 w%, most preferably from 40 w% to 60 w% as compared to the total weight of the meat or fish replacement product, in particular a meat replacement product, for example an emulsified meat replacement product, such as plant-based ham. An exemplary embodiment is shown in Example 1.4 - Figure 1.4.

### Meat or fish replacement products

Meat analogue, vegan meat or meat or fish replacements are used synonymously to describe a plant-based protein products intended to replace animal- or fish-based meat products. Consumers usually prefer colors of meat or fish replacement products that resemble the natural red color of meat or fish.

However, these plant-based protein products do usually not have the red shade of meat. For example, wheat-based protein products are usually grey.

The present natural red coloring compositions help to give meat or fish replacement products the red shade of meat.

Preferred meat or replacement products are plant-based burgers, steaks, or patties.

In one embodiment, the natural red coloring composition is present in amount from 0.1 w% to 15 w%, preferably from 1 w% to 10 w%, even more preferably from 2.5 w% to 7.5 w% as compared to the total weight of the meat or fish replacement product.

In one embodiment, the meat or fish replacement product comprises protein in amount from 10 w% and 50 w% as compared to the total weight of the meat or replacement product.

In one embodiment, the meat or fish replacement product comprises fat in an amount from 10 w% and 50 w% as compared to the total weight of the meat or fish replacement product.

A further aspect, is a method for coloring a meat or fish replacement products, in particular plant-based burgers, steaks, patties or emulsified meat, comprising:
▪ Mixing the natural red coloring composition of any one of the preceding claims with the meat or fish replacement matrix; and
▪ Forming the meat or fish replacement products, in particular plant-based burgers, steaks, patties or emulsified meat.

A further aspect is a meat or fish replacement products, in particular plant-based burgers, steaks, patties or emulsified meat comprising the natural red coloring composition of the present invention.

### pH of natural red coloring composition

In one embodiment, the pH of the natural red coloring composition at a concentration of 10 w% in distilled water is from 2 to 6, preferably from 2.25 to 5.

### pH of meat or fish analogues

Meat analogues usually have a pH of at about 4 or more, such as about 5 or more, or 6 or more.

Accordingly, in one embodiment, the pH of the meat or fish replacement product is between 4 and 7, preferably between 5 and 6.

The compositions of the present inventions are stable in the pH range of meat or fish analogues.

### Heat stability

Furthermore, meat analogues need to be heat stable, as they are usually fried or cooked. As shown in Figure 1, the coloring performance of the natural red coloring compositions are surprisingly similar to those of meat after heat treatment.

### Powder

In one embodiment, the natural red powder coloring composition is a powder, for example a spray-dried powder.

### Further ingredients

The natural red powder coloring composition may further comprise further ingredients such as acidity regulators like citric acid, antioxidants like tocopherol or/and ascorbic acid, ascorbyl palmitate, carriers such as dried glucose solids and maltodextrin, antifoaming agents, vegetable oil, glycerol, emulsifiers and gelling agents like gum arabic.

The skilled person can choose the quantity of the ingredients so that they add up to 100 w%.

### Coloring performance

In one embodiment, the natural red coloring composition has a red color with a hue value H in the CIELAB color system in the range of 10-30, measured at an average of 5 readings, L*-value of (70.0 ± 0.1) in a 2.0 inch petri dish with a LAV aperature (30mm) using the Datacolor 850 in reflectance mode under D65 illuminant 10 Deg.

### EXAMPLES

The following examples illustrate the natural red powder coloring compositions further without, however, limiting the scope of the invention.

Following natural red coloring compositions were tested:

### Example 1.1 - Figure 1.1 - Red beet, paprika and red sweet potato

The natural red coloring composition comprised the following pigments:

| | |
|---|---|
| ▪ Red beet | 2.5 w% to 35 w% |
| ▪ Paprika | 0.2 w% to 2.5 w% |
| ▪ Hansen sweet potato | 2.5 w% to 58 w% |

0.2g/200mL pH 3 citrate buffer L=73.0-76.0 C= 28.0-30.0 h=20.0-23.0

The meat-like coloring performance and heat stability in a meat orfish replacement product (plant-based burger prepared according to example 2) before and after heating is shown in Figure 1.1.

### Example 1.2 - Figure 1.2 - Beta-carotene, black carrot, red sweet potato

The natural red coloring composition comprised the following pigments:

| | |
|---|---|
| ▪ Beta-carotene | 0.01 w% to 2.5 w% |
| ▪ Black carrot juice | 0.5 w% to 20 w% |
| ▪ Hansen sweet potato | 2.5 w% to 58 w% |

0.2g/200mL DI water L=49.0-51.0 C=46.0-48.0 h=17.0-20.0

The meat-like coloring performance and heat stability in a meat orfish replacement product (plant-based burger prepared according to example 2) before and after heating is shown in Figure 1.3.

### Example 1.3 - Figure 1.3 - Red beet, paprika, red sweet potato

The natural red coloring composition comprised the following pigments:

| | |
|---|---|
| ▪ Red beet | 2.5 w% to 35 w% |
| ▪ Paprika | 0.2 w% to 2.5 w% |
| ▪ Hansen sweet potato | 2.5 w% to 58 w% |

0.2g/200mL pH 3 citrate buffer L=76.0-78.0 C=32-35 h=359.0-0.2

The meat-like coloring performance and heat stability in a meat orfish replacement product (plant-based burger prepared according to example 2) before and after heating as compared to is shown in Figure 1.4.

### Example 1.4 - Figure 1.4 - Beta carotene and red sweet potato

The natural red coloring composition comprised the following pigments:

| | |
|---|---|
| ▪ Beta carotene | 0.01 w% to 2.5 w% |
| ▪ Hansen sweet potato | 2.5 w% to 58 w% |

0.04g/200mL pH 3 citrate buffer L=76.0-78.0 C=39.0-41.0 h=7.5-9.5

The meat-like coloring performance and heat stability in a meat orfish replacement product (plant-based burger prepared according to example 2) before and after heating as compared to is shown in Figure 1.5.

### Example 2 - Plant based burger comprising natural red coloring composition

A plant-based burger was prepared with the following ingredients (w%):
Burger: 250 g

| **Ingredient** | **w%** | 1.3 | 2.1 | 1.7 | 1.06 |
|---|---|---|---|---|---|
| Pea Protein T70S | 15.00 | 37.50 | 37.50 | 37.50 | 37.50 |
| S-2020 | 5.00 | 12.50 | 12.50 | 12.50 | 12.50 |
| Ceboline raw binder | 8.00 | 20.00 | 20.00 | 20.00 | 20.00 |
| Palm oil flakes | 18.00 | 45.00 | 45.00 | 45.00 | 45.00 |
| Chilled water (<5%) | 54.00 | 131.75 | 129.75 | 130.75 | 132.35 |

| **Exemplary natural red coloring compositions:** | | | | | |
|---|---|---|---|---|---|
| Hansen Sweet Potato, Paprika, Beet | | 3.25 | | | |
| Beet, Beta-carotene, Hansen Sweet Potato | | | | | 2.65 |
| | 100.00 | 250.00 | 250.00 | 250.00 | 250.00 |

The Burger was prepared according to the following process:
1. Hydrate natural red coloring composition in chilled water.
2. Add dry ingredients to a Cuisinart - 9 cup food processor and pulse 4-5 times. Do not over blend or texture will be too fine.
3. Add colored water and pulse until ingredients come together. Scrape sides as needed.
4. Weigh out 113g and place in parchment lined burger press. Press firmly until burger is shaped.
5. Using an induction burner, use setting 2 and heat a non-stick pan to 375°F.
6. Cover and cook burger for 10 min each side.

### Example 3 - Plant-based tuna comprising natural red coloring composition

Composition of the plant-based tuna - component A: 200 g:

| | |
|---|---|
| ▪ Water | 149.76 |
| ▪ Sunflower oil | 39.74 |
| ▪ Lory Stab 5543-2 | 9.00 |
| ▪ Beet, Paprika, Hansen Sweet Potato | 1.50 |
| ▪ Total | 200.00 |

**The plant-based tuna** - **component A was prepared according to the following process:**
1. Add oil to Thermomix
2. Add Lorty Stab 5543-2 into running Thermomix, speed 4
3. Add water while running for about 1 min
4. Scrap sides as needed
5. Place product into the rectangular mold and flash freeze 30-40 min.

### Composition of the plant-based tuna - component B:

| | |
|---|---|
| ▪ Component A (max 33F) | 70.00 w% |
| ▪ Ice water | 21.30 w% |
| ▪ Lory Bind 5468-1 | 7.00 w% |
| ▪ Lory Protein H11 | 1.00 w% |
| ▪ Salt | 0.70 w% |
| ▪ Total | 100.00 |

**The plant-based tuna** - **component B was prepared according to the following process:**
1. Cut frozen Component A into chunks and add to Thermomix
2. Add all dry ingredients and blend for 30 seconds at speed 4
3. Add ice water and blend for 30 seconds at speed 4
3. Place Component B back into rectangular mold and freeze (flash freeze or overnight)

### Cooking of the plant-based tuna:

1. Fill a non-stick fry pan with about 1/4" sunflower.
2. Heat oil to 375°F and fry for 5-6 min each side.
3. Cool and then take pictures.

### Example 5 - Plant-based ham comprising natural red coloring composition

The plant-based ham had the following composition (in grams):

| | |
|---|---|
| ▪ Vital wheat gluten | 96.82 |
| ▪ Citric acid, granular | 0.2 |
| ▪ Hansen Sweet Potato, Beta-carotene | 0.37 |
| ▪ DI water | 102.61 |
| ▪ Total | 200.000 |

The plant-based ham composition was processed as follows:
1. Add citric acid and vital wheat gluten to a Kitchen Aid mixer; blend for on "stir" for 1 minute
2. Weigh out colors and add to water; mix until fully incorporated
3. With mixer on speed 2, slowly pour color/water into bowl
4. Gradually turn up to speed 4 and mix until a ball is formed, and vital wheat gluten is hydrated
5. Shape into a tube and wrap in plastic
6. Heat in a water bath set to 83°C for 30 min and then freeze
7. Slice ham tube and vacuum seal slices. Heat in a water batch at 92°C for 90 min
8. Freeze

### Example 6 - Datacolor comparison to animal meat and primary plant-based food products:

| Product | Std. CIE L | Std. CIE a | Std. CIE b | Std. CIE C | Std. CIE h |
|---|---|---|---|---|---|
| Real Meat: 80% Lean, 20% Fat | 54.46 | 10.95 | 13.02 | 17.01 | 49.92 |
| Real Meat: 85% Lean, 15% Fat | 49.77 | 15.12 | 14.39 | 20.88 | 43.59 |
| Real Meat: 90% Lean, 10% Fat | 48.26 | 16.04 | 13.68 | 21.08 | 40.44 |
| Impossible Meat | 50.12 | 15.78 | 15.97 | 22.45 | 45.35 |
| Beyond Meat | 52.93 | 10.80 | 12.04 | 16.17 | 48.11 |
| Hansen Sweet Potato, Paprika, Beet | 45.24 | 16.62 | 10.54 | 19.68 | 32.40 |
| Beet, Beta-carotene, Hansen Sweet Potato | 51.29 | 21.83 | 12.77 | 25.29 | 30.32 |

## Claims

1. The use of a natural red coloring composition comprising:
▪ red beet and/or red sweet potato; and
▪ one or more further pigments selected from the group consisting of paprika, beta-carotene, and black carrot
for coloring meat or fish replacement products, in particular plant-based burgers, steaks, patties or emulsified meat.

2. The use according to claim 1, wherein the natural red coloring composition is in the form of a powder.

3. The use according to any one of the preceding claims, wherein the natural red coloring composition comprises two pigments, in particular beta-carotene and red sweet potato.

4. The use according to any one of the preceding claims, wherein the composition comprises three pigments, in particular
▪ Red beet, paprika and red sweet potato;
▪ Beta-carotene, black-carrot juice, and red sweet potato; or
▪ Red beet, paprika, and red sweet potato.

5. The use according to any one of the preceding claims, wherein the weight ratio between the red beet and/or the red sweet potato and the one or more further pigments is from 5:1 to 50:1, preferably from 7.5:1 to 30:1, even more preferably from 10:1 to 15:1.

6. The use according to any one of the preceding claims, wherein the composition comprises no further pigment.

7. The use to any one of the preceding claims, wherein the composition does not comprise one or more pigments selected from the group consisting of apple, caramel, acerola, malt and Carthamus.

8. The use according to claim 1, wherein the pH of the meat or fish replacement product is between 4 and 6, preferably between 5 and 6.

9. The use according to any one of the preceding claims, wherein the natural red coloring composition is present in amount from 0.1 w% to 15 w%, preferably from 1 w% to 10 w%, even more preferably from 2.5 w% to 7.5 w% as compared to the total weight of the meat or fish replacement product.

10. The use according to any one of the preceding claims, wherein the meat or fish replacement product comprises protein in amount from 10 w% and 50 w% as compared to the total weight of the meat or fish replacement product.

11. The use according to any one of the preceding claims, wherein the meat or fish replacement product comprises fat in an amount from 10 w% and 50 w% as compared to the total weight of the meat or fish replacement product.

12. A method for coloring a meat or fish replacement product, in particular a plant-based meat or fish replacement products, in particular plant-based burgers, steaks, patties or emulsified meat, comprising:
▪ Mixing the natural red coloring composition of any one of the preceding claims with the meat or fish replacement matrix; and
▪ Forming the meat or fish replacement products, in particular plant-based burgers, steaks, patties or emulsified meat.

13. A meat or fish replacement products, in particular plant-based burgers, steaks, patties or emulsified meat, comprising the natural red coloring composition of any one of the preceding claims.

## Amended claims

### Amended claims in accordance with Rule 137(2) EPC.

1. The use of a natural red coloring composition comprising:
▪ red sweet potato; and
▪ one or more further pigments selected from the group consisting of paprika, beta-carotene, and black carrot
for coloring meat or fish replacement products, in particular plant-based burgers, steaks, patties or emulsified meat,
wherein the natural red coloring composition is in the form of a powder.

2. The use according to any one of the preceding claims, wherein the natural red coloring composition comprises two pigments, in particular beta-carotene and red sweet potato.

3. The use according to any one of the preceding claims, wherein the composition comprises three pigments, in particular
▪ Red beet, paprika and red sweet potato; or
▪ Beta-carotene, black-carrot juice, and red sweet potato.

4. The use according to any one of the preceding claims, wherein the weight ratio between the red beet and/or the red sweet potato and the one or more further pigments is from 5:1 to 50:1, preferably from 7.5:1 to 30:1, even more preferably from 10:1 to 15:1.

5. The use according to any one of the preceding claims, wherein the composition comprises no further pigment.

6. The use to any one of the preceding claims, wherein the composition does not comprise one or more pigments selected from the group consisting of apple, caramel, acerola, malt and Carthamus.

7. The use according to claim 1, wherein the pH of the meat or fish replacement product is between 4 and 6, preferably between 5 and 6.

8. The use according to any one of the preceding claims, wherein the natural red coloring composition is present in amount from 0.1 w% to 15 w%, preferably from 1 w% to 10 w%, even more preferably from 2.5 w% to 7.5 w% as compared to the total weight of the meat or fish replacement product.

9. The use according to any one of the preceding claims, wherein the meat or fish replacement product comprises protein in amount from 10 w% and 50 w% as compared to the total weight of the meat or fish replacement product.

10. The use according to any one of the preceding claims, wherein the meat or fish replacement product comprises fat in an amount from 10 w% and 50 w% as compared to the total weight of the meat or fish replacement product.

11. A method for coloring a meat or fish replacement product, in particular a plant-based meat or fish replacement products, in particular plant-based burgers, steaks, patties or emulsified meat, comprising:
▪ Mixing the natural red coloring composition of any one of the preceding claims with the meat or fish replacement matrix; and
▪ Forming the meat or fish replacement products, in particular plant-based burgers, steaks, patties or emulsified meat.

12. A meat or fish replacement products, in particular plant-based burgers, steaks, patties or emulsified meat, comprising the natural red coloring composition of any one of the preceding claims.
